# EUROPEAN PATENT APPLICATION

(11) **EP 2 802 148 A1**
(43) Date of publication of application: **12.11.2014**
(21) Application number: 13002454.0
(22) Date of filing: 08.05.2013
(51) Int. Cl.: H04N 13/04, G02B 27/22

(54) **Display device for time-sequential multi-view content**

(71) Applicant: ETH Zurich, 8092 Zurich (CH)
(72) Inventor: Gross, Markus, CH - 8006 Zürich (CH); Ranieri, Nicola, CH - 8050 Zürich (CH)

(57) **Abstract**

A display apparatus comprises an image generation device (210) that displays a sequence of images. The sequence comprises subsequences that are temporally interlaced. The images are composed of a plurality of pixels (211, 212). Each pixel emits a set of light rays (201, 202) that are essentially non-divergent at least in the horizontal direction. A beam steering device (220) directs the light rays from the pixels to different viewing directions at different times. A control device (230) synchronizes the image generation device and the beam steering device in such a manner that, at least for selected pixels, light rays representing different subsequences are directed to different ranges of viewing directions, so as to render the apparatus automultiscopic or autostereoscopic.

## Description

### TECHNICAL FIELD

The present description relates to automultiscopic and/or autostereoscopic display methods and devices. A display is called automultiscopic if it creates at least two different views to different directions, without the need for head-mounted gear. A display is called autostereoscopic if it is capable of selectively showing different images to different eye positions to obtain a stereo parallax effect, without the need for head-mounted gear. Autostereoscopic devices form a subclass of the class of automultiscopic devices.

### PRIOR ART

3D displays, which provide the illusion of depth, have become increasingly popular not only in cinemas, but also in home entertainment and mobile devices. Many 3D displays require the user to wear specific glasses, in particular, shutter glasses or polarization filter glasses. However, it is commonly agreed that wearing glasses for watching 3D is cumbersome and inhibits the immersion and viewing experience.

Display devices capable of creating the illusion of depth without the need for specific glasses can mainly be divided in three categories:
(a) Volumetric displays create a volume of individually addressable light sources, naturally approximating a scene. However, their content is restricted to the provided volume, which also requires sufficient physical space, lowering the attractiveness of such devices. Furthermore, such devices are generally very complex and expensive.
(b) Parallax barrier displays consist of two flat layers. The layer facing the viewer generates a blocking barrier pattern, interlaced with thin transparent slits. The layer in the back consists of diffusely emitting pixels and is used to generate multiple spatially interlaced views (spatial multiplexing). Different pixels of the back layer are exposed through the barrier slits to different viewing angles. This can be used to show distinct images to left and right eyes, creating a stereo parallax effect.
(c) Instead of parallax barriers, lenticular sheets can be used for spatial multiplexing. This technique is also called integral imaging. A lenticular sheet consists of a plurality of lenticular structures, e.g., cylindrical lenslets. The lenticular sheet is positioned in front of a layer of diffusely emitting pixels arranged in or near the focal plane of the lenslets. The light emitted by the pixels is refracted by the lenslets to different directions, the direction depending on the position of the pixel relative to the lenslet. This results in a similar effect as with parallax barrier displays.

Devices that employ spatial multiplexing trade in spatial resolution (number of pixels per unit area) in favor of angular resolution (number of views per unit angle). As angular resolution directly relates to the extent of depth that such displays can show without visual artifacts, both approaches suffer from either shallow depth or low spatial resolution. For instance, if a display of this type is capable of showing twelve different views, it has a resolution that is reduced by a factor of twelve.

Compared to glasses-based displays which can show multiple meters of depth at full resolution without breaching the comfort zone, all three approaches are not competitive.

It has also been proposed to employ temporal multiplexing instead of spatial multiplexing to achieve automultiscopy and/or autostereoscopy. Such approaches are described, e.g., in N. A. Dodgson et al., "Time-Sequential Multiprojector Autostereoscopic 3D Display", J. Soc. Information Display, Vol. 8, No. 2, 2000, pp. 169-176 and in N. A. Dodgson et al., "A 50-inch Time-Multiplexed Autostereoscopic Display", Proc. SPIE, vo. 3957, 2001, pp. 177-183. In a first approach that has remained purely theoretical, it was proposed to illuminate a high-speed transparent image-generating screen through a collimating lens by a plurality of parallel, vertical illumination bars in or near the focal plane of the collimating lens. Depending on which illumination bar is switched on, the image of the screen is projected to different angles. Rapidly changing the image on the screen in synchronization with changing which illumination bar is turned on produces a time-multiplexed automultiscopic display. Such an approach requires an extremely fast transparent screen, which is not readily available. In a second approach, an image from a high-speed cathode ray tube (CRT) is projected onto a viewing lens by a projection lens array. Ferroelectric shutters in the center of the projection lens array ensure that the light from the CRT is projected only to a narrow range of viewing directions. In both approaches different views are projected to different directions in a time-sequential manner. The maximum number of possible directions is determined by the number of illumination bars or shutters, respectively, and cannot be arbitrarily increased. This limits the number of possible viewing zones. Furthermore, these viewing zones are fixed in space.

N. A. Dodgson, "Autostereoscopic 3D Displays", Computer, Vol. 38, Issue 8, pp. 31-36, August 2005 surveys existing technologies for multi-view displays, including the above-discussed spatially and temporally multiplexed 3D devices.

In US 2008/0259233, gradient-index (GRIN) lenses made of a material with an electrically controllable index of refraction are employed to generate a lenticular sheet. The lenticular sheet is used to collimate light from diffusely emitting pixels to different directions to achieve spatial multiplexing, resulting in a finite number of views. The viewing zones to which the views are projected are fixed in space. By periodically shifting the GRIN lenses laterally, or by augmenting the GRIN lenses with a by periodically varying prismatic component, either spatial resolution is improved, or the number of views is increased.

G. Itoh, "Hardware and Software Technologies for Glasses-Free 3D TVs and PCs", SID Symposium Digest of Technical Papers, Volume 43, Issue 1, pages 210-213, June 2012 discloses an embodiment that uses spatial multiplexing. Controllable gradient index lenses are employed to do the spatial multiplexing of different images to different directions.

J. Stockley and S. Serati, "Advances in liquid crystal beam steering", Proceedings SPIE, Volume 5550, Free-Space Laser Communication IV, pages 32-40, October 2004 disclose a device to steer light into different directions. They provide a method based on optical phased arrays. Such devices have not been used for automultiscopic or autostereoscopic displays so far.

### SUMMARY OF THE INVENTION

In a first aspect, the present invention provides a display that is capable of automultiscopic and/or autostereoscopic viewing without sacrificing spatial resolution. In another aspect, the present invention provides an autostereoscopic display that has the potential of achieving a large artifact-free depth appearance of the displayed content. In yet another aspect, the present invention provides an automultiscopic and/or autostereoscopic display that can be flexibly adapted to different applications and needs.

The present invention provides a display apparatus comprising:
an image generation device for displaying a sequence of 2D images comprising at least a first subsequence and a second subsequence, the first and second subsequence being temporally interlaced, the images being composed of a plurality of pixels, the image generation device being configured to emit, for each pixel, a set of light rays that are essentially non-divergent in at least a first plane;
a beam steering device configured to controllably direct the light rays from the image generation device to different viewing directions at different times; and
a control device configured to synchronize the image generation device and the beam steering device in such a manner that, at least for selected pixels, light rays representing the first subsequence are directed to a first range of viewing directions and light rays representing the second subsequence are directed to a second range of viewing directions that is different from the first range of viewing directions.

The set of light rays for each pixel is preferably a beam of essentially parallel light, i.e., the light rays for each pixel are preferably not only essentially non-divergent in the first plane (in the following referred to as the horizontal plane), but also essentially non-divergent in a second plane that is perpendicular to the first plane (in the following referred to as the vertical plane). However, it is also conceivable that the light rays for each pixel form a fan of light that is essentially non-divergent only in the first (horizontal) plane while diverging in the second (vertical) plane. The beam steering device is then preferably configured to controllably redirect the light rays in the first (horizontal) plane only.

The term "range of viewing directions" is to be understood to mean a continuous set of directions in space. For instance, the range of viewing directions may be a narrow cone or a fan-shaped range. More specific examples will be provided below. The first and second range of viewing directions should preferably not overlap; however, an overlap is not excluded as long as these ranges are not identical. The term "viewing zone" will in the following be used to indicate a continuous set of locations in space from which an image generated by the image-generating device can be viewed as a result of the action of the beam steering device. The sets of light rays that correspond to a particular subsequence will be called a "view". In preferred embodiments, at each instant of time a view is directed to exactly one viewing zone. Each of the subsequences may comprise a succession of different images, forming a movie, or it may form a succession of identical images, forming a video still. The subsequences will generally be different from each other, representing the same scene viewed from different directions, or representing entirely different scenes. However, the subsequences may also be identical. The sequence of images may comprise more than two subsequences, e.g., three, four, five etc. interlaced subsequences. In practice, up to at least 500 interlaced subsequences are conceivable if a sufficiently fast image generation device is employed.

The present invention addresses the above-mentioned issues of low resolution and low artifact-free depth extent of displayed content by using the temporal rather than the spatial domain to multiplex different images into different directions. In other words, the different images are displayed in a time-sequential manner (sometimes also called "field-sequential") and are directed to different viewing directions at different times. The apparatus operates with light that is collimated with respect to at least one direction for each pixel (light rays that are non-divergent in at least one plane) rather than with diffusely emitted light (light rays that are divergent in both the horizontal and vertical planes). It is therefore not necessary for the beam steering device to carry out any focusing for individual pixels. This leads to high flexibility in the design of the beam steering device and to simple operation of the beam steering device. A large number of viewing directions can be covered in this manner in a highly flexible way.

The image generation device can be implemented in various ways. For instance, the device may comprise one or more uniformly emitting point light sources. One or more lenses, in particular, Fresnel lenses or gradient index (GRIN) lenses, may be provided to collimate the light rays emitted by these point light sources. The light rays may then pass through a liquid crystal display for color attenuation. Alternatively, the image generation device may comprise a laser projector, which is an example of a device capable of emitting images always in focus, whose light may if necessary be parallelized using one or more lenses, such as Fresnel or GRIN lenses. In a preferred embodiment, the image generation device comprises a laser diode array. Laser diodes naturally emit collimated light with very narrow divergence and very narrow color bandwidth, are available at different light frequencies and can modulate light at extremely fast refresh rate. The fast refresh rate can be used to display content with high angular resolution, which directly translates in a higher artifact free depth range. The narrow color bandwidth of the emitted light results in a large color gamut when laser diodes with different light frequencies are employed, resulting in more color intensive images compared to state of the art LED displays.

The image generation device is preferably configured to emit the sets of light rays of the pixels in such a manner that the sets of light rays for all pixels are essentially parallel with respect to the first (horizontal) plane when they hit the beam steering device. If each set of light rays is a beam of essentially parallel light rays, the beams for all pixels are preferably parallel. This considerably simplifies construction and operation of the beam steering device. However, it is also conceivable that sets of light rays of different pixels are emitted by the image generation device into different horizontal and/or vertical directionsand are subsequently deflected by the beam steering device by individually different amounts.

The control device is preferably configured to control the beam steering device in such a manner that at any given instant of time the light rays of all pixels are directed to a single viewing zone. In other words, the display apparatus preferably carries out pure temporal multiplexing, without carrying out any spatial multiplexing at all. This results in a particularly simple implementation. However, it is also conceivable that at a given instant in time, light rays for different groups of pixels are directed to different viewing zones. This is readily possible if single pixels or groups of pixels are associated with individually addressable beam steering elements of the beam steering device. In other words, a combination of temporal and spatial multiplexing is conceivable. For instance, it is conceivable to permanently direct the left half of the display to a first viewer and the right half of the display to a second viewer, one or both viewers being presented with stereo views created by temporal multiplexing. As another example, it is also conceivable to use spatial multiplexing for creating stereo views, and to present different stereo views created in this manner to multiple viewers by temporal multiplexing.

In a preferred embodiment, the beam steering device is configured to controllably tilt (deflect) the light rays of each pixel at least in the first (horizontal) plane. In a particularly simple embodiment, the beam steering device is configured to controllably tilt the light rays of each pixel in the first plane only. In other words, the apparatus may be configured to achieve angular resolution only in the first plane. The beam steering device may further be configured to diffuse the light rays of each pixel within a predetermined angular range in the same (i.e. first) plane. In the alternative or in addition, the beam steering device may continuously scan the light rays for each subsequence over a continuous angular range in the first plane. The beam steering device is preferably further configured to diffuse the light rays of each pixel in a second plane that is perpendicular to the first plane (in particular, in the vertical plane). This is in particular preferred if the light rays of each pixel form a beam of parallel light before they hit the beam steering device. By employing vertical diffusion in addition to controllably tilting the light beams in the horizontal plane, light fans can be created, the direction of these fans being controllable in the horizontal direction. Thus multiple viewing zones in the form of vertical strips can be created. However, it is also conceivable that the beam steering device is configured to controllably deflect the light rays in the first plane as well as in the second plane, so as to sequentially direct the light rays to multiple viewing zones that may be spatially limited in both the horizontal and vertical directions and may be arranged at different heights with respect to the vertical direction. For instance, the beam steering device may sequentially deflect the light rays to multiple eyes at different horizontal and vertical positions.

Diffusion of the light in the first and/or second plane can be achieved by the same technology as tilting of the light if dynamic control over the diffusing angle is desired. Such technologies are discussed below and include GRIN devices and electrically deformable polymer materials. Depending on the technology used for tilting, diffusion can even be achieved by employing the very same structure or layer as for tilting. Alternatively, a separate structure or layer for diffusion may be employed. If no control over the diffusing angle is needed, a passive structure, e.g., a commercially available holographic 1D diffuser film can be used for diffusion in the first and/or second plane.

In a simple embodiment, the beam steering device may be configured to deflect the sets of light rays of all pixels by essentially the same controllable tilt angle, i.e., the entire beam steering device may be addressable as a whole with only one single parameter (the common tilt angle). In other embodiments, the beam steering device may comprise a plurality of individually addressable beam steering elements. Each pixel may be associated with its own beam steering element, or the pixels may form groups (e.g., color quadruplets), each such group being associated with an individually addressable beam steering element. Preferably, the pixels of the image generation device are arranged in an array having a plurality of vertical columns, and each column is associated with at least one individually addressable beam steering element, or the columns form groups of a predetermined number of columns, and each group is associated with at least one individually addressable beam steering element. In this manner, light from different columns or groups of columns can be tilted by different amounts to ensure that columns on the left and the right sides of the display will hit the same viewing zone.

The beam steering device is preferably configured to tilt the light rays by imposing a phase delay to the light in each set of light rays that belongs to one pixel, the phase delay spatially varying in a controllable manner across the pixel. In particular, if the light rays enter the beam steering device in the form of beams of parallel light rays, the beam steering device may define an input plane for each light beam, the input plane being perpendicular to the light beam, and may be configured to cause a phase delay to the light entering the input plane, the phase delay controllably varying across the input plane.

To create the phase delays, the beam steering device may comprise an electrically controllable gradient index (GRIN) device. A GRIN device is a device that utilizes spatial variations of the refractive index of a material to redirect, focus and/or diffuse light. An electrically controllable GRIN device may comprise a liquid crystal material sandwiched between electrodes. By applying voltages to the electrodes, the director orientation of the liquid crystals can be adjusted. The director orientation in turn influences the refractive index of the material. An example is provided in US 2008/0259233 A1. The disclosure of this document is incorporated herein by reference in its entirety for teaching GRIN devices for redirecting and/or focusing light. In the context of the present invention, an electrically controllable GRIN device may be used for controllably tilting and/or for diffusing the light rays. In particular, the very same GRIN device may be employed to tilt the light in a predetermined first plane (in particular, in the horizontal plane) and to diffuse the light by some amount in the same plane. For tilting the light, a refractive index with a linear gradient is generated in the GRIN device, whereas for diffusing the light, a non-linear (e.g., quadratic) gradient with positive curvature may be superimposed on the linear gradient. Vertical diffusion may also be achieved with a GRIN device. In this case, the device for achieving vertical diffusion is preferably separate from the device employed for tilting and/or diffusing the light in the horizontal plane.

Instead of or in addition to a GRIN device, the beam steering device may comprise electrically deformable, transparent polymer elements for controllably redirecting and/or for diffusing the light rays. Such polymer elements are disclosed, e.g., in WO 2007/090842 and WO 2007/090843. The disclosure of these documents is incorporated herein by reference in its entirety for teaching optical elements that may be used to impose a tunable phase delay to light entering the optical element so as to controllably deflect the light by a variable angle and/or to focus the light.

In summary, the beam steering device can act to reshape sets of incoming light rays. Reshaping can comprise diffusing each set of rays over a certain angular range, tilting it into a new direction, or a combination of both. The beam steering device can be controlled locally (e.g. pixel-wise) or uniformly over the whole layer. If an LC-based GRIN device or electrically controllable polymer elements as discussed above are used, the operations of diffusion and/or tilting can be achieved dynamically by changing voltages applied to these devices. A similar effect can be achieved using diffraction. To this end the beam steering device may comprise a diffraction grating that is covered by a material which can control the phase delay per grating slit. In this way, the same principle as it is used to create holograms can be used to redirect or diffuse light passing through the grating (see Stockley, J. and Serati, S., "Advances in liquid crystal beam steering", cited above).

In some embodiments, the display apparatus may further comprise a head-tracking device configured to track at least a head position of a viewer. Head-tracking devices are well known from the prior art. They can be used to determine the position of the head of a viewer and to estimate the positions of the eyes of the viewer. The control device may receive position information from the head-tracking device and controls the beam steering device in such a manner that the left eye of the viewer (but preferably not the right eye of the first viewer) is located in the first range of viewing directions and that the right eye of the viewer (but preferably not the left eye of the viewer) is located in the second range of viewing directions, so as to render the display device autostereoscopic. In other words, the head tracking device may ensure that the viewing zones for the left eye and the right eye are always where the eyes actually are. Thus head tracking may ensure that the views for the left and the right eye actually always end up in the left and the right eye, respectively. Head tracking may further be used to ensure that, depending on head position, different views are presented to the viewer. This enables the viewer to "look around" an object presented to the viewer by the apparatus. Therefore, by employing head tracking, a more realistic 3D impression may be obtained.

However, head tracking can also be employed in situations where automultiscopy without autostereoscopy is desired, e.g., in situations where two viewers want to watch different movies on the same screen. In this case, the head-tracking device can be configured to track at least the head positions of a first and a second viewer, and the control device receives position information from the head-tracking device and controls the beam steering device in such a manner that both eyes of the first viewer are located in the first range of viewing directions and that both eyes of the second viewer are located in the second range of viewing directions, so as to render the display device automultiscopic for at least two viewers.

Both approaches can of course be combined if the sequence of images comprises an appropriate number of subsequences. For instance, if the sequence of images comprises at least four temporally interlaced subsequences, the first and second subsequence may be directed into the left and right eye of a first viewer, and the third and fourth subsequence may be directed into the left and right eye of a second viewer, so as to obtain autostereoscopic images for multiple viewers.

Head tracking may be unnecessary if the display apparatus generates a sufficiently large number of views over a sufficiently large, continuous angular range so as to enable meaningful multiscopic viewing even in the presence of head movements.

In all these applications, it is preferred if the refresh rate of each subsequence is at least 50 Hz, more preferably at least 60 Hz. If the display apparatus provides a number of N views, the refresh rate of the image generation device should accordingly be at least N * 50 Hz, better at least N * 60 Hz. For instance, if the number of views is 500, the refresh rate of the image generation device should be at least 25 kHz, better at least 30 kHz. This can readily be achieved with an array of laser diodes.

With a large number of views and high refresh rates, it may be challenging to achieve a sufficiently large data transmission rate for transmitting the image information from a storage device to the control device. In order to keep the data rate at an acceptable level, interpolation schemes may be used. In such schemes, image information is transmitted only for certain selected sample views, whereas the control device interpolates between these sample views. In particular, the first subsequence may comprise images for a first selected viewing direction, and the second subsequence may comprise images for a second selected viewing direction. The control device may then be configured to receive information about the first and the second subsequence and to calculate one or more interpolating images, the interpolating images representing estimated intermediate views for viewing directions between the first viewing direction and the second viewing direction. The control device may further be configured to cause the image generation device to display the interpolating images between an image of the first subsequence and an image of the second subsequence. The control device may further be configured to drive the beam steering device so as to carry out a sweep between the first selected viewing direction and the second selected viewing direction while the interpolating images are displayed by the image generation device. The sweep can be continuous or stepped.

In another aspect, the present invention provides a method of displaying images, the method comprising:
generating a sequence of images comprising at least a first subsequence and a second subsequence, the first and second subsequence being temporally interlaced, the images being composed of a plurality of pixels, each pixel corresponding to a set of light rays that are essentially non-divergent in at least a first plane;
directing those sets of light rays that represent the first subsequence to a first range of viewing directions and those sets of light rays that represent the second subsequence to a second range of viewing directions that is different from the first range of viewing directions.

All considerations that are discussed for the apparatus of the present invention apply also to the method of the present invention. In particular, as discussed above, the method may comprise carrying out head tracking to track a head position of one or more viewers and determining the first and second ranges of viewing directions based on said measurement. The light rays of each pixel may be controllably tilted in the first plane (in particular, the horizontal plane). They may be diffused within a predetermined angular range in the first plane and/or may be diffused a second plane perpendicular to the first plane (in particular, in the vertical plane). The method may comprise operating a GRIN device to generate a gradient index having a linear component to redirect the light rays. The gradient index may further have a nonlinear component (in particular, a quadratic component) with positive curvature to diffuse the sets of light rays. In the alternative or additionally, the method may comprise operating electrically deformable, transparent polymer elements for controllably redirecting and/or for diffusing the light rays.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: illustrates the principles underlying a prior-art display employing a lenticular sheet for spatial multiplexing;
- Fig. 2: illustrates the principles underlying the present invention, which is based on temporal multiplexing;
- Fig. 3: illustrates the manner in which light beams may be horizontally tilted and vertically diffused by a beam steering device;
- Fig. 4: illustrates an embodiment of the present invention for achieving autostereoscopic viewing for two independent viewers;
- Fig. 5: is an exemplary radial intensity diagram for a single pixel with interpolated views;
- Fig. 6: illustrates various embodiments of an image generation device for use in conjunction with the present invention;
- Fig. 7: illustrates the working principle of an LC-based GRIN device;
- Fig. 8: illustrates a practical implementation of an LC-based GRIN device;
- Fig. 9: illustrates an embodiment employing an LC-based GRIN device in combination with a diffraction grating;
- Fig. 10: illustrates the working principle of a beam steering device based on electrically deformable polymer elements; and
- Fig. 11: illustrates an embodiment employing electrically deformable polymer elements in combination with a diffraction grating.

### DESCRIPTION OF PREFERRED EMBODIMENTS

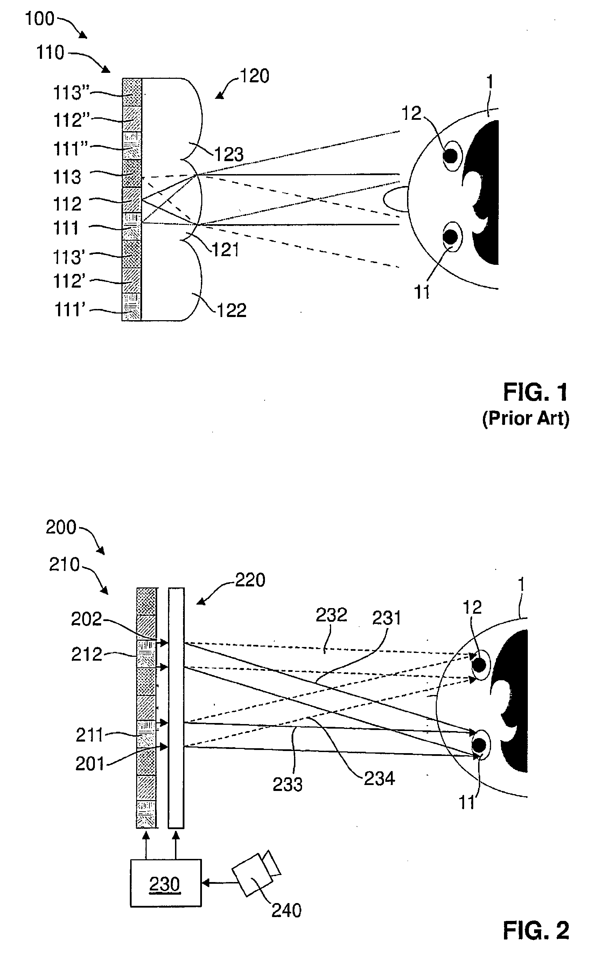

Figure 1 illustrates the working principle of a prior-art integral imaging device 100 employing a lenticular sheet 120. The Figure is not drawn to scale and is meant only as an aid for explaining the working principle of such a prior-art device. The device comprises a conventional, planar 2D display 110 (e.g. a standard TFT display) and a lenticular sheet 120, which covers the front surface of the display 110. The display 110 comprises an array of pixels arranged in rows and columns. In the simplified example of Fig. 1, only a single row of nine pixels 111, 112, 113, 111', 112', 113', 111", 112", and 113" is illustrated. The lenticular sheet comprises a plurality of cylindrical lenslets 121, 122, 123, the cylinder axes of the lenslets extending perpendicular to the drawing plane. In the present example, each lenslet covers three pixels. Lenslet 121 covers pixels 111, 112 and 113; lenslet 121 covers pixels 111', 112' and 113'; and lenslet 123 covers pixels 111", 112" and 113".

Each pixel emits divergent (diffuse) light in a broad range of directions. The lenslets act to collimate the light rays emitted by each pixel with respect to the horizontal direction while keeping the divergence of the light rays unaffected with respect to the vertical direction. Since the pixels are shifted relative to the lenslet axis by different amounts, each pixel is projected to a different range of horizontal directions. In the present example, pixels 111, 111' and 111" are projected to a first viewing zone, which encompasses the right eye 12 of a viewer 1; columns 112, 112' and 112" are projected to a second viewing zone, which encompasses a region between the eyes of the viewer; and columns 113, 113' and 113" are projected to a third viewing zone, which encompasses the left eye 11 of the viewer. Each of these spatially interlaced groups of pixels represents one view. In this manner three spatially interlaced views are spatially multiplexed to three different horizontally-spaced viewing zones.

The prior-art device has a number of disadvantages. In particular, the horizontal resolution of each view corresponds to only one third of the horizontal resolution of the display 110. Furthermore, the lenticular sheet 120 tends to magnify the subpixel structure out to the viewing zones, creating dark band-shaped artifacts resulting from the inter-pixel areas.

In order to mitigate some of these problems, it has been proposed to provide the cylindrical lenslets in a slanted orientation relative to the columns of the display. In this manner, both horizontal and vertical resolution are divided amongst the multiple horizontally-spaced views. The slanted lenslets also smear out the dark bands so that they arc no longer visible. Nevertheless, as a consequence of the principle of spatial multiplexing, the overall resolution is still reduced by the number of views. Since it is technologically very challenging to increase the spatial resolution of the display 110, the number of views (in other words, the angular resolution of the device) cannot be increased arbitrarily in practice. The best known devices today achieve an angular resolution of 12 views.

Figure 2 illustrates the working principle of a display apparatus 200 according to the present invention. Again, this Figure is not drawn to scale and is meant only as an aid for explaining the working principle of the present invention. An image generation device 210 comprises an array of pixels arranged in rows and columns. For instance, the display may comprise an array of 1920 x 1080 pixels arranged in 1920 columns and 1080 rows. In the simplified example of Fig. 2, again only one single row with 9 pixels is illustrated. In contrast to the prior-art device of Fig. 1, each pixel emits a set of light rays that have only a small divergence in the horizontal plane (i.e., in the drawing plane), preferably essentially no measurable divergence in this plane at all. In particular, each pixel may emit a beam of essentially parallel (collimated) light. In other words, each pixel emits light only into a specific horizontal direction or, more generally, into a very narrow horizontal angular range. In the present example, pixel 211 emits parallel beam 201, and pixel 212 emits parallel beam 202.

At each instant of time, the image generation device displays an entire image with full spatial resolution. The image generation device 210 displays a sequence of such images (frames). This sequence comprises at least two subsequences. In the present example, the first subsequence contains views for the left eye of a viewer, while the second subsequence contains views for the right eye of the viewer. These subsequences are temporally (time-sequentially) interlaced: an image of the first subsequence is followed by an image of the second subsequence, which in turn is followed by the next image of the first subsequence, and so on. This sequence of images is provided to the image generation device 210 by a controller 230.

A beam steering device 220 controllably directs these two subsequences to different directions. In the present example, the images of the first subsequence are directed to the left eye 11 of the viewer 1 (beams 231, 233), while the images of the second subsequence are directed to the right eye 12 of the viewer 1 (beams 232, 234). To this end, the controller 230 appropriately synchronizes the image generation device 210 and the beam steering device 220. In this manner, the images are temporally (time-sequentially) multiplexed to two different ranges of viewing directions at full spatial resolution.

In order to determine the eye positions, the apparatus 200 may comprise a head-tracking device 240. Head-tracking devices are known from the prior art. The head-tracking device may comprise, e.g., a camera and a processor executing a head-recognition algorithm on the images obtained by the camera. The head-tracking device delivers position estimates for the positions of the eyes 11, 12 to the controller 230. Based on these estimates, the controller 230 drives the beam steering device 220 in such a manner that the beams appropriately hit these positions.

In the present example, the beam steering device tilts the beams of different pixels by different angles. For instance, when the beams of pixels 211 and 212 are directed to the left eye 11, the deflection angle for pixel 211 is much smaller than the deflection angle for pixel 212. In other words, in the present example the beam steering device may be considered to comprise a plurality of individually controllable (individually addressable) beam steering elements, each beam steering element being associated with exactly one pixel. However, in other embodiments it may be sufficient to form groups of pixels whose beams are tilted by the same angle. For instance, it may be advantageous to always tilt the pixels of a color quadruplet, of a column or of a group of columns by the same horizontal angle. In yet other embodiments, it even may be sufficient if all pixels are always tilted by the same amount.

All these considerations can of course be readily generalized to more than two views, i.e., to more than two subsequences that are multiplexed to more than two eyes, or, more generally speaking, to more than two ranges of viewing directions.

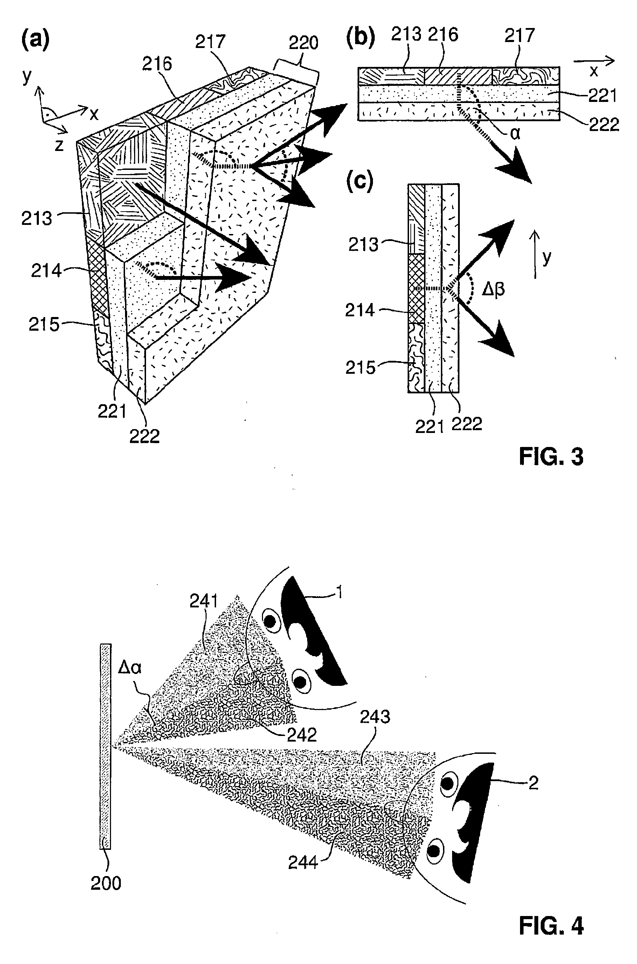

Figure 3 (a) schematically illustrates a beam steering device that not only tilts the incoming beams in the horizontal plane, but also diffuses the beams in the vertical plane, so as to spread the parallel incoming light into a broad vertical viewing range. Elements having a similar function are designated by the same reference numerals as in Fig. 2. An image generation device 210 comprises an array of pixels arranged in rows along the x direction and columns along the y direction. Each pixel 213, 214, 215, 216, 217 emits a beam of parallel light in the z direction. These beams are tilted horizontally (in the x-z plane) by a steering layer 221 of the beam steering device 220, and are subsequently diffused vertically (in the y-z plane) by a 1D diffusion layer 222. The order of the two layers (steering and diffusion) can be swapped. Figure 3 (b) illustrates how a beam is tilted horizontally by an angle α. Figure 3 (c) illustrates how the beam is subsequently diffused vertically into a range Δβ. The beam steering device may further be configured to also diffuse the beams over a certain horizontal range in the x-z plane (not illustrated).

Fig. 4 illustrates how autostereoscopic viewing for two independent viewers can be achieved with the present invention. The display apparatus generates four temporally interlaced subsequences of images. For instance, from a time t0 to a time t1, an image of the first subsequence is generated; from a time t1 to a time t2, an image of the second subsequence is generated; from a time t2 to a time t3, an image of the third subsequence is generated; and from a time t3 to a time t4, an image of the fourth subsequence is generated. This succession of images belonging to the first, second, third and fourth subsequence is repeated.

In a first embodiment, the beam steering device not only tilts the beams horizontally, but also diffuses the beams over a certain horizontal angular range Δα. In this case, the beam steering device horizontally tilts the incoming beams into the center of range 241 and horizontally diffuses the incoming beams over an angle Δα to form a range 241 from time t0 to time t1; it tilts and diffuses the beams into range 242 from time t1 to time t2; into range 243 from time t2 to time t3; and into range 244 from time t3 to time t4. In other words, the beam steering device is switched to a different horizontal range at times t0, t1, t2, and t3; at time t4, the beam steering device is switched back again to the first range, and the succession is repeated.

In an alternative embodiment, the beam steering device does not diffuse the beams horizontally or does so only in an angular range that is narrower than angle Δα. In this case, the beam steering device may continuously scan the beam over range 241 from time t0 to time t1, over range 242 from time t1 to time t2, etc.

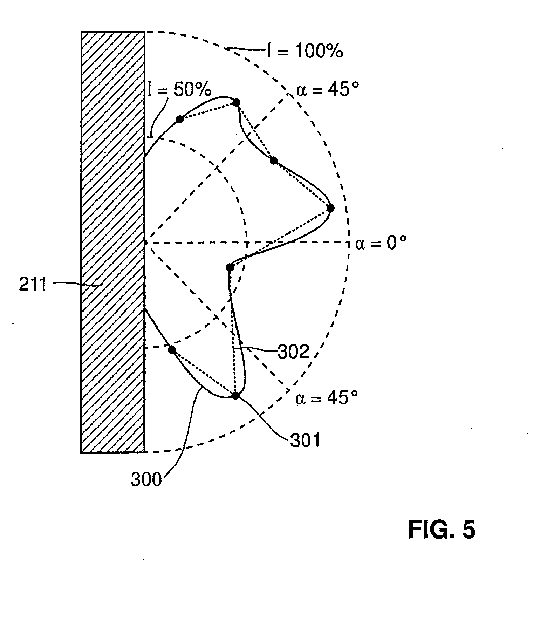

Fig. 5 is an exemplary horizontal radial intensity diagram for a single pixel 211 in an automultiscopic application. An input radiation function (plenoptic function) 300 is discretized at sampling points 301 and approximated by an interpolating function 302 between sampling points 301. In the present example, a linear interpolation was chosen; instead, any other type of interpolation (e.g., quadratic or higher polynomial splines) can be chosen. Each sampling point represents an intensity of the pixel for one selected view, relative to the maximum pixel intensity I = 100%. The intensity values of all pixels that belong to the same view represent one image. A time sequence of images that belong to the same view forms one subsequence. The subsequences belonging to the different views form a sequence, wherein the subsequences are temporally interlaced.

In a preferred embodiment, the display apparatus will receive the sequence of those images that belong to the views at the sampling points. The display apparatus may then display the approximate input radiation function by sweeping the beam steering device over a broad range of horizontal angles (e.g., from α = 20° to 160°) while the pixel intensity is changed according to the interpolating function 302 in an essentially continuous manner. In this manner, a good approximation of the entire plenoptic function in the horizontal plane can be obtained over a broad range of horizontal angles, while the bandwidth requirements are kept moderate since information about only a few selected views needs to be transmitted. The appearance of the scene to a viewer will be very natural, since no sudden changes in intensity will occur when the viewer moves his head between different viewing directions.

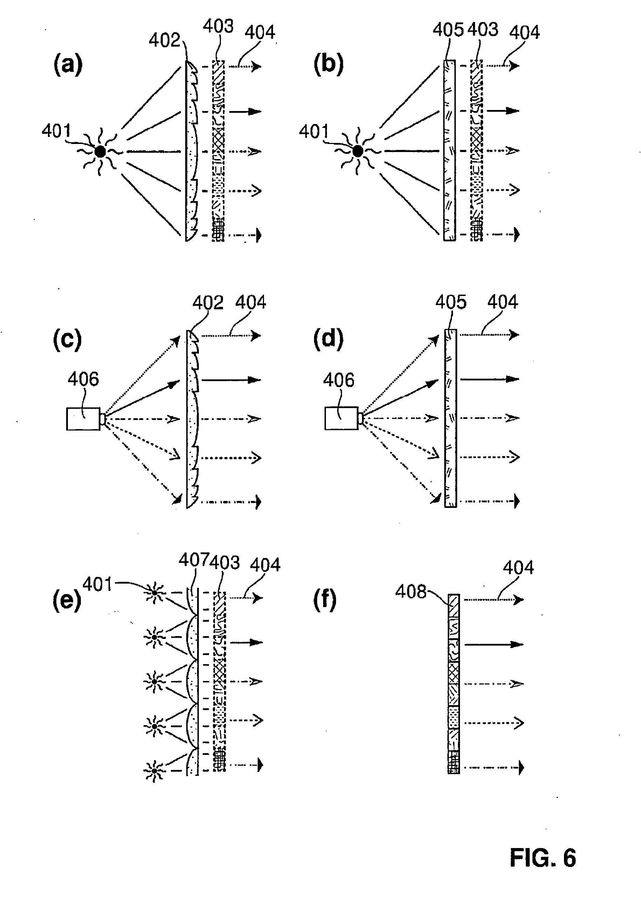

Figure 6 illustrates various possible implementations of an image generation device that may be used in conjunction with the present invention.

In the embodiment of example (a), a point light source 401, e.g., a halogen light bulb as it is commonly used in projectors, illuminates a collimator lens in the form of a Fresnel lens 402. The Fresnel lens collimates the light into a parallel bundle of rays of white light. The parallel bundle is color-attenuated by a non-diffusing LCD screen 403 having a plurality of individually addressable pixels. The color-attenuated light leaves each pixel in the form of a beam 404 of essentially parallel light of a certain color and intensity. The light beams of all pixels are parallel.

In the embodiment of example (b), the general setup is very similar to example (a). However, instead of a Fresnel lens, the collimator lens is a GRIN lens 405. The GRIN lens may be a static device, or it may be dynamically adjustable by the application of a voltage.

In the embodiment of example (c), a laser projector 406 generates a divergent bundle of narrowly divergent, non-overlapping beams, each beam representing one pixel. The beams are collimated into a parallel bundle of parallel, non-overlapping beams by a Fresnel lens 402. In the embodiment of example (d), a GRIN device is used for the same purpose.

The embodiment of example (e) is similar to the embodiments of examples (a) and (b). However, instead of a single point light source, an array of point light sources is employed, increasing the compactness of the setup. The divergent light of each of these light sources is collimated into a parallel bundle of parallel beams by an array of collimating lenses 407.

These lenses may be, e.g., traditional lenses, Fresnel lenses or GRIN lenses.

A preferred embodiment is illustrated in example (f). Here, the image generation device is implemented as an array of laser diodes 408. Each of the laser diodes emits a beam of parallel light rays of variable intensity and a predetermined, narrow wavelength range. Each such beam represents a pixel. All beams are essentially parallel. In a preferred embodiment, an array of, e.g., 1920 x 1080 laser diodes is employed.

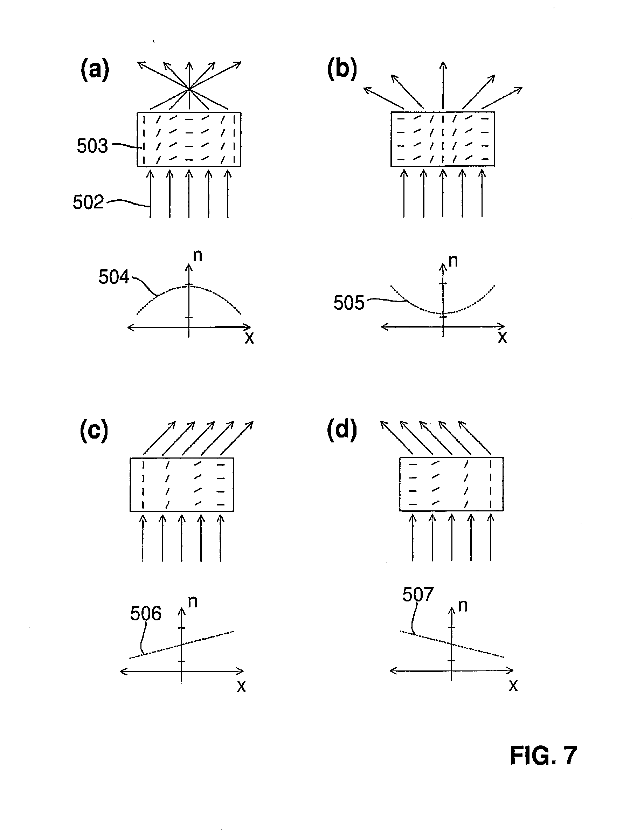

The beam steering device may be implemented in different ways. One possible implementation employs one or more electrically controllable GRIN devices. Fig. 7 illustrates the working principle of an LC-based GRIN device. Parallel light rays 502 enter a cell 503 containing a material with an electrically controllable index of refraction. The material may be a liquid crystal (LC) material, sandwiched between two electrode layers. Depending on the voltages applied to the electrode layers, the liquid crystal molecules will have a different director orientation. The index of refraction of the material depends on the director orientation. In this manner, the index of refraction can be electrically controlled. If the index of refraction is constant over the entire cross section of the cell, the light rays 502 will pass through the cell without being deflected. If, on the other hand, the index of refraction has a gradient across the cross section of the cell, the light rays will be refracted, the direction of refraction depending on the gradient of the index of refraction. Figure 7 shows four examples (a)-(d), wherein each example is illustrated by a schematic sketch of the director distribution of the LC molecules (top) and a diagram illustrating the resulting variation of the index of refraction n (bottom).

In example (a), the index of refraction has a gradient with a negative curvature (curve 504). In particular, the index of refraction has a negative quadratic component. This leads to focusing of the light rays. In example (b), the index of refraction has a gradient with a positive curvature (curve 505). In this case, the light rays will be diffused into divergent directions. Example (c) illustrates a linear, positive gradient, causing the light rays to be tilted without any focusing or diffusion. Example (d) illustrates a linear, negative gradient, resulting in the light rays being tilted into the opposite direction. By combining these examples, focusing or diffusing can be combined with tilting the light beams in the same device.

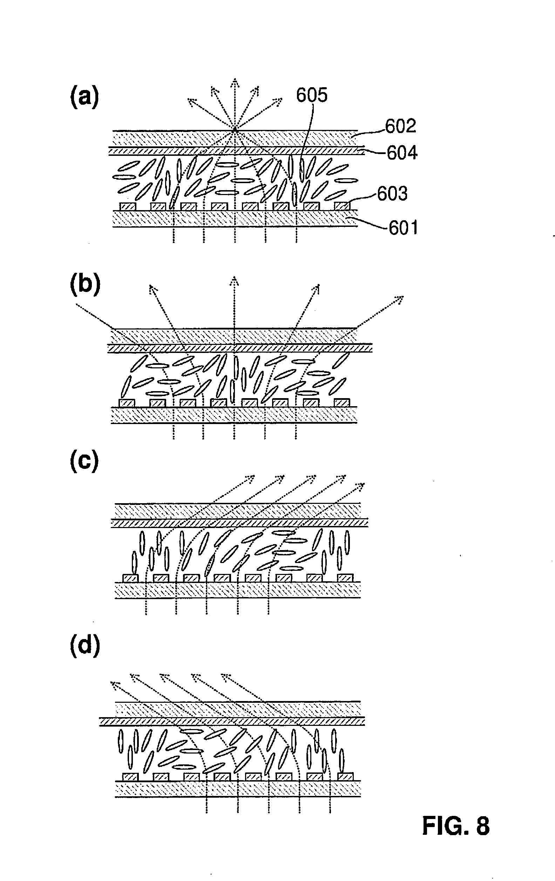

Fig. 8 illustrates a possible practical implementation of an LC-based GRIN device. A bottom glass plate 601 and a top glass plate 602 are each provided with an electrode layer 603, 604. Each electrode layer comprises a plurality of elongate electrodes, the electrodes extending along the y direction in the bottom layer (in Fig. 8, this corresponds to a direction perpendicular to the drawing plane) and extending along the x direction in the top layer (in Fig. 8, this corresponds to the horizontal direction in the drawing plane). By applying different potential dsitributions to the electrodes, a voltage distribution can be achieved between the electrodes, the voltage distribution varying in the x-y-plane.

A nematic LC material is sandwiched between the electrode layers. Each glass plate is additionally coated by a rubbed indium tin oxide (ITO) or plastic layer (not shown), the rubbing directions being the same for the bottom and top glass plates. This causes the directors or long axes of the LC molecules to orient themselves parallel to the rubbing direction in the absence of a voltage between the electrodes. When a voltage is applied, the molecules change their orientation, causing a change in refractive index. By applying a suitable voltage distribution, a desired gradient of the refractive index can be obtained. Examples (a)-(d) of Fig. 8 correspond to examples (a)-(d) of Fig. 7.

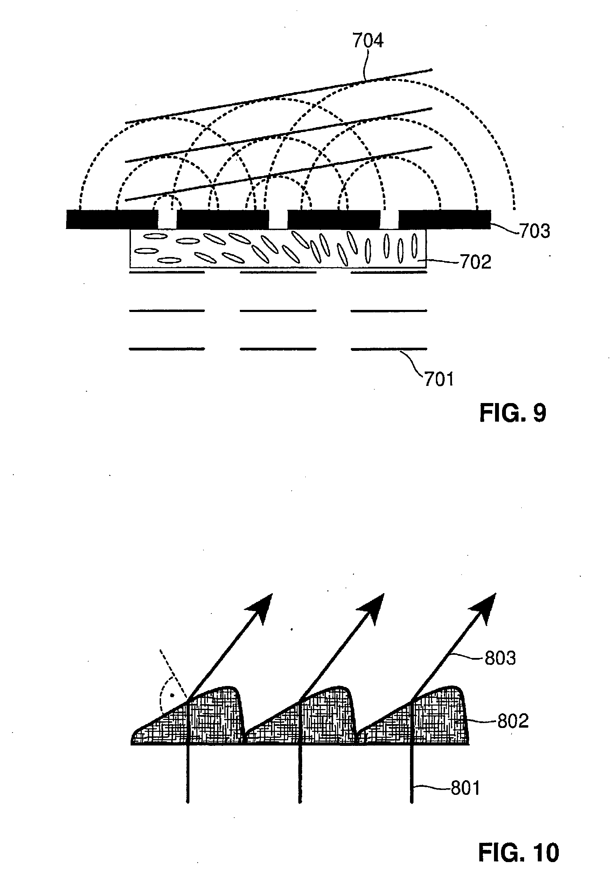

Fig. 9 illustrates an embodiment of a beam steering device that employs a GRIN device in combination with a diffraction grating. Parallel incoming light waves with wave fronts 701 hit a GRIN device 702. The GRIN device causes a phase delay to the incoming waves, the phase delay varying across the GRIN device. The waves thus reach the slits of a diffraction grating 703 with different phases. Each slit therefore causes a cylindrical wave with a different phase. The cylindrical waves interfere to cause a wave front 704 that is tilted with respect to the direction of the incoming waves. The tilt angle can be adjusted by adjusting the voltage distribution in the GRIN device.

Fig. 10 illustrates the working principle of a beam steering device based on electrically deformable polymer elements. By action of electric voltages, polymer elements 802, arranged in an array, are deformed to a prismatic shape, causing incoming light beams 801 to be tilted into direction 803.

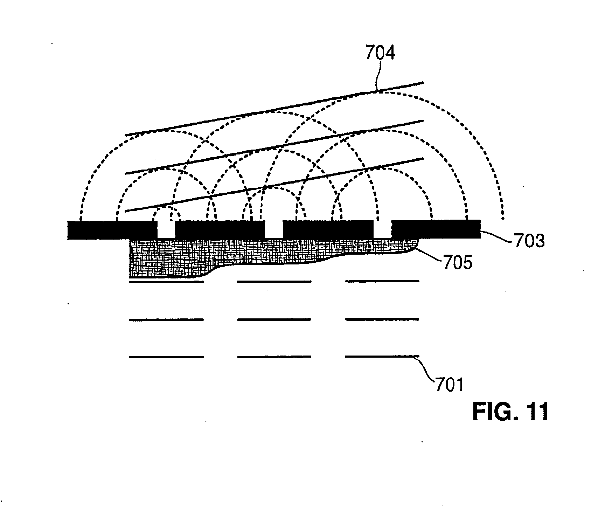

Fig. 11 illustrates an embodiment that employs electrically a deformable polymer material in combination with a diffraction grating. The setup is similar to Fig. 7. Instead of the GRIN element 702 of Fig. 7, an electrically deformable polymer layer 705 is employed to induce phase delays to the incoming light waves.

As described above, the display device of the present invention can be used in different ways, opening up the path to a variety of applications.

In a first application example, eye positions of the viewers are tracked. Each pixel in the image generation device swaps between left and right view of stereoscopic image pairs, depending on whether the current viewing direction of the beam steering device is closer to a viewer's left or right eye. In this way, every viewer can see autostereoscopic 3D without wearing head-mounted equipment, making the application appealing for both home entertainment as well as cinemas. Furthermore, some viewers may be served with right- or left-eye images only, if they prefer to watch content in 2D. This can be taken even further, when different content is shown to different viewers, each viewer watching his own movie.

In a second application example, images are displayed independent of the viewer's position, rendering the display automultiscopic. Given that laser diodes are capable of switching their intensity at 30 MHz, a laser-diode based display can show 500 individual views at 60 Hz refresh rate. This clearly outperforms the 12 views which current automultiscopic displays achieve, even when multiplying by the number of repeated viewing zones in some prior-art devices, which usually is less than 10. As discussed above, in such applications the transmission bandwidth might become a limiting factor. However, transmission bandwidth has increased largely over the past years and is expected to scale further with time.

If no autostereoscopy or automultiscopy is desired, the display device of the present invention can show 2D images at full spatial resolution without further modifications to the device. State of the art requirements of being flat and low power consuming are met too and allow the invention to be deployed in cinemas, home entertainment, promotional displays, mobile devices and more.

It will be apparent from the above description that various modifications can be made without leaving the scope of the present invention, and that the invention is in no way limited to the above examples.

## Claims

1. A display apparatus comprising:
an image generation device (210) configured to display a sequence of images comprising at least a first subsequence and a second subsequence, the first and second subsequence being temporally interlaced, the images being composed of a plurality of pixels (211, 212), the image generation device being configured to emit, for each pixel, a set of light rays (201, 202) that are essentially non-divergent in at least a first plane (x-z) and preferably also in a second plane (y-z) that is perpendicular to the first plane (x-z);
a beam steering device (220) configured to controllably direct the sets of light rays from the pixels (211, 212) of the image generation device (210) to different viewing directions at different times; and
a control device (230) configured to synchronize the image generation device (210) and the beam steering device (220) in such a manner that, at least for selected pixels, light rays representing the first subsequence are directed to a first range of viewing directions and light rays representing the second subsequence are directed to a second range of viewing directions that is different from the first range of viewing directions.

2. The display apparatus of claim 1, wherein the image generation device (210) is configured to emit the light rays (201, 202) in such a manner that the sets of light rays of all pixels (211, 212) are essentially parallel with respect to at least the first plane.

3. The display apparatus of any one of the preceding claims, wherein the beam steering device (220) is configured to controllably tilt the light rays (201, 202) of each pixel (211, 212) at least in the first plane (x-z).

4. The display apparatus of claim 3, wherein the beam steering device (220) is further configured to diffuse the light rays (201, 202) of each pixel (211, 212) within a predetermined angular range (Δα) in the first plane (x-z) and/or to continuously sweep the light rays (201, 202) of each pixel (211, 212) over a predetermined angular range (Δα) in the first plane (x-z).

5. The display apparatus of claim 3 or 4, wherein the beam steering device (220) is further configured to diffuse the light rays of each pixel (211, 212) in a second plane (y-z) that is perpendicular to the first plane (x-z).

6. The display apparatus of any one of the preceding claims, wherein the beam steering device (220) is configured to tilt the light rays (201, 202) of each pixel by imposing a phase delay to the light rays of each pixel, the phase delay spatially varying in a controllable manner across each pixel.

7. The display apparatus of any one of the preceding claims, wherein the beam steering device (220) comprises a GRIN device (503) and/or electrically deformable, transparent polymer elements (802) for controllably redirecting and/or for diffusing the light rays.

8. The display apparatus of any one of the preceding claims, further comprising a head-tracking device (240) configured to track at least a head position of a first viewer (1), wherein the control device (230) is configured to receive position information from the head-tracking device (240) and to control the beam steering device (220) in such a manner that the left eye (11) of the first viewer (1) is located in the first range of viewing directions and that the right eye (12) of the first viewer (1) is located in the second range of viewing directions, so as to render the display device autostereoscopic.

9. The display apparatus of any one of claims 1-7, further comprising a head-tracking device (240) configured to track at least head positions of a first and a second viewer (1, 2), wherein the control device is configured to receive position information from the head-tracking device (240) and to control the beam steering device (220) in such a manner that at least one eye of the first viewer (1) is located in the first range of viewing directions and that at least one eye of the second viewer (2) is located in the second range of viewing directions, so as to render the display device automultiscopic for at least two viewers.

10. The display apparatus of any one of the preceding claims,
wherein the first subsequence comprises images for a first selected viewing direction,
wherein the second subsequence comprises images for a second selected viewing direction,
wherein the control device (230) is configured to receive information about the first and the second subsequence and to generate one or more interpolating images, the interpolating images representing estimated intermediate views for viewing directions between the first viewing direction and the second viewing direction,
wherein the control device (230) is configured to cause the image generation device (210) to display the interpolating images between an image of the first subsequence and an image of the second subsequence, and
wherein the control device (230) is configured to drive the beam steering device (220) so as to carry out a sweep between the first selected viewing direction and the second selected viewing direction while the interpolating images are displayed by the image generation device (210).

11. A method of displaying images, the method comprising:
generating a sequence of images comprising at least a first subsequence and a second subsequence, the first and second subsequence being temporally interlaced, the images being composed of a plurality of pixels, each pixel corresponding to a set of light rays (201, 202) that are essentially non-divergent in at least a first plane (x-z) and preferably also in a second plane (y-z) that is perpendicular to the first plane (x-z);
directing those light rays that represent the first subsequence to a first range of viewing directions and those light rays that represent the second subsequence to a second range of viewing directions that is different from the first range of viewing directions.

12. The method of claim 11, further comprising carrying out a head tracking to track a head position of at least a first viewer and determining the first and second ranges of viewing directions based on said measurement.

13. The method of claim 11 or 12, wherein the sets of light rays are tilted at least in the first plane (x-z), are preferably diffused in a second plane (y-z) perpendicular to the first plane, and are optionally diffused within a predetermined range of viewing directions in the first plane (x-z).

14. The method of any one of claims 11-13, the method comprising operating a GRIN device (503) to generate a gradient index having a linear component to tilt the light rays and/or a nonlinear component to diffuse the light rays.

15. The method of any one of claims 11-14, the method comprising operating electrically deformable, transparent polymer elements (802) for controllably tilting and/or for diffusing the light beams.
